# EUROPEAN PATENT APPLICATION

(11) **EP 4 819 022 A1**
(43) Date of publication of application: **07.10.2026**
(21) Application number: 24897231.7
(22) Date of filing: 06.11.2024
(51) Int. Cl.: G06Q 50/04

(54) **KNOWLEDGE MANAGEMENT DEVICE, KNOWLEDGE MANAGEMENT METHOD, AND KNOWLEDGE MANAGEMENT PROGRAM**

(30) Priority: 27.11.2023 JP 2023199777
(71) Applicant: OMRON Corporation, Kyoto-shi, Kyoto 600-8530 (JP)
(72) Inventor: EGAMI, Shin, Kyoto-shi, Kyoto 600-8530 (JP); FUJIKI, Tsubasa, Kyoto-shi, Kyoto 600-8530 (JP); FUJIMOTO, Shinya, Kyoto-shi, Kyoto 600-8530 (JP); HASHIMOTO, Naoya, Kyoto-shi, Kyoto 600-8530 (JP)
(74) Representative: Mewburn Ellis LLP
(86) International application number: PCT/JP2024/039450
(87) International publication number: WO 2025/115543

(57) **Abstract**

A knowledge management apparatus includes: an acquisition unit configured to acquire work information of a work process of a worker; a determination unit configured to determine a work state of the worker, based on the work information acquired by the acquisition unit; a question generation unit configured to generate a question text regarding the work state of the worker, based on a determination result of the determination unit; an inquiry unit configured to transmit the question text generated by the question generation unit and receive an answer to the question text; and an information registration unit configured to register, in a storage unit, knowledge information in which the work process and the answer received by the inquiry unit are associated with each other.

## Description

### TECHNICAL FIELD

The present disclosure relates to a knowledge management apparatus, a knowledge management method, and a knowledge management program for managing knowledge information for a worker's work.

### BACKGROUND ART

Conventionally, transfer and learning of insights (knowledge) for a work process have generally been conducted through manufacturing instruction sheets, guidance from experienced predecessors, or training mechanisms such as training.

However, implicit insights (knowledge) are extremely diverse, and it has been difficult to formalize and transfer each insight through manual work.

In this regard, for example, Japanese Patent Laying-Open No. 2002-312375 (PTL 1) proposes a method for sharing tacit knowledge. In addition, Japanese Patent Laying-Open No. 2003-196203 (PTL 2) proposes a method for collecting information and building a database.

### CITATION LIST

### PATENT LITERATURE

PTL 1: Japanese Patent Laying-Open No. 2002-312375
PTL 2: Japanese Patent Laying-Open No. 2003-196203

### SUMMARY OF INVENTION

### TECHNICAL PROBLEM

Meanwhile, insights (knowledge) for a work process are diverse, and further improvement is necessary in terms of efficient management.

The present disclosure is made to solve the above problems, and an object of the present disclosure is to provide a knowledge management apparatus, a knowledge management method, and a knowledge management program capable of efficiently managing knowledge information regarding a worker's work process.

### SOLUTION TO PROBLEM

A knowledge management apparatus according to an example of the present disclosure includes: an acquisition unit configured to acquire work information of a work process of a worker; a determination unit configured to determine a work state of the worker, based on the work information acquired by the acquisition unit; a question generation unit configured to generate a question text regarding the work state of the worker, based on a determination result of the determination unit; an inquiry unit configured to transmit the question text generated by the question generation unit and receive an answer to the question text; and an information registration unit configured to register, in a storage unit, knowledge information in which the work process and the answer received by the inquiry unit are associated with each other. According to this configuration, knowledge information regarding the worker's work process for determining the work state of the worker, generating a question text, based on the determination result, and registering knowledge information in which the received answer and the work process are associated with each other in the storage unit, can be efficiently managed.

The knowledge management apparatus further includes an analysis unit configured to analyze the work information acquired by the acquisition unit and generates work state information. The determination unit determines the work state of the worker, based on a comparison between the work state information generated by the analysis unit and criteria information indicating a criterion of the work process of the worker. According to this configuration, since the work state of the worker can be determined, based on the comparison between the work state information generated by the analysis unit and the criteria information, the determination can be performed in a simple manner.

The knowledge management apparatus further includes a criteria registration unit configured to register the criteria information. According to this configuration, since the criteria information can be registered, knowledge information regarding the worker's work process can be efficiently managed.

The knowledge management apparatus further includes an explanatory information registration unit configured to register explanatory information regarding the work process. The question generation unit generates the question text regarding the work state of the worker, based on the determination result of the determination unit and the explanatory information. According to this configuration, since the question text can be generated based on the explanatory information, the degree of freedom of the question text can be improved and knowledge information regarding the worker's work process can be efficiently managed.

The knowledge management apparatus further includes an information presentation unit configured to present the knowledge information registered in the storage unit to the worker. According to this configuration, since the knowledge information can be presented to the worker, improvement of the worker's work process can be achieved.

The knowledge management apparatus further includes a relevant-personnel registration unit configured to register information of personnel relevant to the work process of the worker. The inquiry unit transmits the question text, based on the information of the relevant personnel. According to this configuration, since the information of the relevant personnel can be registered, the question text can be transmitted to appropriate relevant personnel in a simple manner.

The knowledge management apparatus further includes a formatting unit that determines whether to register an answer received by the inquiry unit as new knowledge information. The information registration unit registers, in the storage unit, knowledge information in which the work process and the answer received by the inquiry unit are associated with each other, based on a determination result of the formatting unit. According to this configuration, the formatting unit determines whether to register the answer as new knowledge information, so that appropriate knowledge information can be efficiently managed.

The formatting unit performs similarity determination according to natural language processing on the answer received by the inquiry unit and the knowledge information registered in the storage unit, and determines whether to register the answer as new knowledge information, based on a similarity determination result. According to this configuration, it can be easily determined whether to register the answer as new knowledge information, based on the similarity determination result according to the natural language processing, so that knowledge information regarding the worker's work process can be efficiently managed.

A knowledge management method according to the present disclosure includes a step of acquiring work information of a worker's work process, a step of determining a work state of the worker, based on the acquired work information, a step of generating a question text regarding the work state of the worker, based on a determination result, a step of transmitting the generated question text, a step of receiving an answer to the question text, and a step of registering, in a storage unit, knowledge information in which the work process and the received answer are associated with each other. According to this configuration, the work state of the worker is determined, a question text is generated based on the determination result, and knowledge information in which the received answer and the work process are associated with each other is registered in the storage unit, so that knowledge information regarding the worker's work process can be efficiently managed.

A knowledge management program according to the present disclosure is a knowledge management program that causes a computer to execute a knowledge management method, the program comprising a step of acquiring work information of a worker's work process, a step of determining a work state of the worker, based on the acquired work information, a step of generating a question text regarding the work state of the worker, based on a determination result, a step of transmitting the generated question text, a step of receiving an answer to the question text, and a step of registering, in a storage unit, knowledge information in which the work process and the received answer are associated with each other. According to this configuration, the work state of the worker is determined, a question text is generated based on the determination result, and knowledge information in which the received answer and the work process are associated with each other is registered in the storage unit, so that knowledge information regarding the worker's work process can be efficiently managed.

### ADVANTAGEOUS EFFECTS OF INVENTION

According to the knowledge management apparatus, the knowledge management method, and the knowledge management program of the present disclosure, knowledge information regarding a worker's work process can be efficiently managed.

### BRIEF DESCRIPTION OF DRAWINGS

Fig. 1 is a diagram for illustrating a configuration of a knowledge management system 1 according to an embodiment.
Fig. 2 is a diagram for illustrating a configuration of a server 20 according to the embodiment.
Fig. 3 is a diagram for illustrating functional blocks of server 20 according to the embodiment.
Fig. 4 is a flow diagram for illustrating a process of server 20 according to the embodiment.
Fig. 5 is a subroutine flow diagram for illustrating a determination process of a determination unit 115 according to the embodiment.
Fig. 6 is a diagram for illustrating a relevant-personnel table according to the embodiment.
Fig. 7 is a diagram for illustrating an explanatory information table according to the embodiment.
Fig. 8 is a diagram for illustrating a criteria table according to the embodiment.
Fig. 9 is a diagram for illustrating the determination process of determination unit 115 according to the embodiment.
Fig. 10 is a diagram for illustrating a work data table which is work state information according to the embodiment.
Fig. 11 is a diagram for illustrating a knowledge data table according to the embodiment.
Fig. 12 is a diagram for illustrating an inquiry screen by an inquiry unit 117 according to the embodiment.
Fig. 13 is a diagram for illustrating presentation of knowledge information by an information presentation unit 118 according to the embodiment.
Fig. 14 is a diagram for illustrating another inquiry screen by inquiry unit 117 according to the embodiment.
Fig. 15 is another diagram for illustrating the presentation of knowledge information by information presentation unit 118 according to the embodiment.
Fig. 16 is a diagram for illustrating a process of a formatting unit 120 according to the embodiment.

### DESCRIPTION OF EMBODIMENTS

An embodiment according to the present invention will be described, with reference to the accompanying drawings. Note that the same reference sign is used to refer to like or corresponding components in the drawings, and description thereof will not be repeated.

### (Overall Configuration)

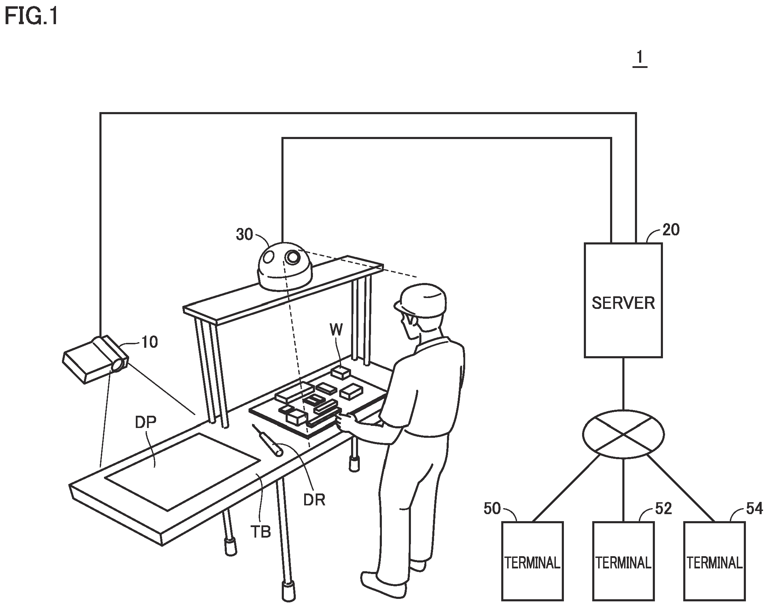

A configuration of a knowledge management system 1 according to an embodiment is now described. Fig. 1 is a diagram for illustrating a configuration of a knowledge management system 1 according to the embodiment. Referring to Fig. 1, knowledge management system 1 includes a projector 10, a server 20, a camera 30, and terminals 50, 52, and 54 connected to a network. Projector 10 and camera 30 are each connected to server 20. An example of a worker performing a product assembly process using a workpiece W placed on a workbench TB is illustrated. The assembly process is, as an example, a process of assembling a product by processing in the order of slider attachment, screw tightening work, and cover attachment. As an example, the worker performs the screw tightening work using a driver DR. A description is now given in which the worker repeatedly performs the product assembly process.

As an example, projector 10 projects (outputs) information regarding a predetermined work onto a projection area DP which is a part of workbench TB. Camera 30 captures an image of a predetermined work state of the worker and outputs the captured image data to server 20 as work information.

Server 20 acquires the captured image data input via camera 30 as work information, determines a work state of the worker, based on the acquired work information, and generates a question text regarding the work state of the worker, based on a determination result. Moreover, server 20 transmits the generated question text, receives an answer to the question text, and registers knowledge information in which the work process and the received answer are associated with each other in a storage unit.

In this example, the example of a worker performing an assembly process is described. However, the present disclosure is not limited thereto. A worker may perform other process. For example, A worker may perform a hole drilling process or a conveyance process.

In this example, an example of projecting (outputting) work instruction information of a predetermined work onto projection area DP using projector 10 is described. However, the present disclosure is not limited thereto. For example, the work instruction information of the predetermined work can be presented to the worker using a display device, instead of projector 10. Moreover, in this example, the work instruction information of the predetermined work is visually presented. However, the information may be presented to the worker by voice using, for example, a speaker. Alternatively, a speaker and projector 10 may be used in combination.

Terminals 50, 52, and 54 are connected to server 20 via a network. Terminals 50, 52, and 54 are provided so that they can answer an inquiry from server 20 regarding a question text about the work state of the worker. Terminals 50, 52, and 54 are associated with relevant personnel MA, MB, and MC, respectively, which will be described later.

While in this example, three terminals are connected to server 20, it should be noted that more terminals may be connected or only one terminal may be connected.

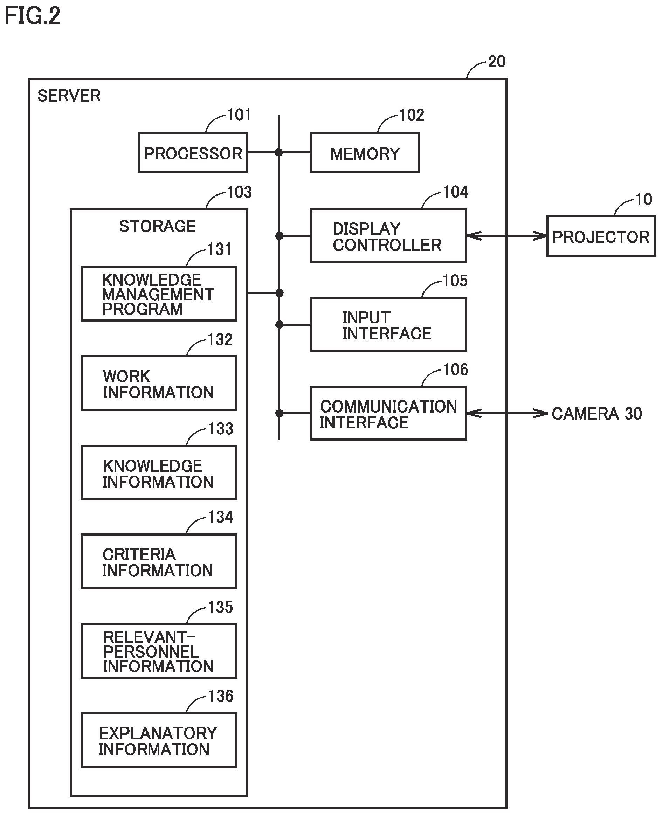

Fig. 2 is a diagram for illustrating a configuration of server 20 according to the embodiment. Referring to Fig. 2, server 20, typically, has a structure according to a general-purpose computer architecture. Specifically, server 20 includes a processor 101 such as a central processing unit (CPU) or a micro-processing unit (MPU), a memory 102, a storage 103, a display controller 104, an input interface 105, and a communication interface 106, which are connected to one another via a bus so that data communications are allowed therebetween. Processor 101 loads various programs stored in storage 103 for execution on memory 102, thereby implementing various processes according to the present embodiment. Memory 102 is, typically, a volatile storage device such as a dynamic random access memory (DRAM), and stores programs, etc. read from storage 103. Storage 103 is, typically, a non-volatile magnetic storage device such as a hard disk drive. Storage 103 stores a knowledge management program 131. Storage 103 also stores work information 132, knowledge information 133, criteria information 134, relevant-personnel information 135, and explanatory information 136. Work information 132 is data regarding a work state in response to a worker's work instruction received from camera 30 transmitted via communication interface 106. Knowledge information 133 is data registered by an information registration unit 119. Knowledge information 133 is data regarding insights in which the work process and the received answer are associated with each other when an answer to the question text is received. Criteria information 134 is data registered by a criteria registration unit 111. Criteria information 134 indicates criteria of the worker's work process. For example, criteria information 134 includes information indicating a criterion regarding the time of the slider attachment work corresponding to the slider attachment. Criteria information 134 includes information indicating a criterion regarding the time of the screw tightening work corresponding to the screw, and information indicating a criterion regarding the time of the cover attachment work corresponding to the cover. Relevant-personnel information 135 is data registered by a relevant-personnel registration unit 114. Relevant-personnel information 135 is contact information of a member of the relevant personnel to whom a question regarding the worker's work process is transmitted. Explanatory information 136 is data registered by an explanatory information registration unit 113. Explanatory information 136 is used when a question generation unit 116 generates a question.

Various programs installed in storage 103 are distributed in a memory card, for example. Display controller 104 is connected to projector 10 and outputs signals for displaying various pieces of information to projector 10 according to an internal command from processor 101. Input interface 105 may mediate data transmission from input devices (not shown) such as a keyboard, a mouse, a touch panel, and a dedicated console. Communication interface 106 mediates data transmission between processor 101 and external equipment (e.g., camera 30). Communication interface 106, typically, includes Ethernet (registered trademark), universal serial bus (USB), or the like. Note that various programs stored in storage 103 may be downloaded from, for example, a distribution server via communication interface 106.

When using a computer having a structure according to the general-purpose computer architecture as described above, an operating system (OS) for providing basic functions of the computer may be installed, in addition to applications for providing functions according to the present embodiment. In this case, the program according to the present embodiment may be one that calls required modules in a predetermined order and timing, among program modules provided as a part of the OS, to perform processes. In other words, the program according to the present embodiment itself does not include the modules as described above, and may perform processes in cooperation with the OS. Note that, alternatively, some or all of the functions provided by execution of knowledge management program 131 may be implemented as a dedicated hardware circuit.

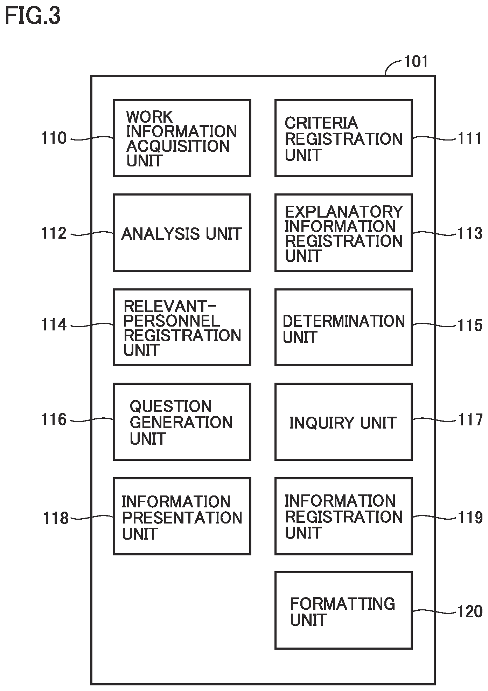

Fig. 3 is a diagram for illustrating functional blocks of server 20 according to the embodiment. Referring to Fig. 3, server 20 constitutes a knowledge management apparatus, and includes a work information acquisition unit 110, a criteria registration unit 111, an analysis unit 112, an explanatory information registration unit 113, a relevant-personnel registration unit 114, a determination unit 115, question generation unit 116, an inquiry unit 117, an information presentation unit 118, information registration unit 119, and a formatting unit 120. Each functional block is implemented by processor 101 executing knowledge management program 131.

Work information acquisition unit 110 acquires work information of the worker's work process. Specifically, work information acquisition unit 110 acquires image data of the worker's work process from camera 30, and stores it in storage 103 as work information 132.

Criteria registration unit 111 registers criteria information 134 indicating a criterion of the worker's work process in storage 103, for example, according to an input by an administrator. In this example, an example of the administrator previously registering criteria information 134 in storage 103 is described. However, the present disclosure is not limited thereto. The information may be downloaded from an external device connected to server 20 and registered in storage 103. The manner of registration is not particularly limited.

Analysis unit 112 analyzes work information 132, based on work information 132 stored in storage 103, and generates work state information in response to the worker's work instruction. Analysis unit 112 analyzes work information 132, which is image data of the worker's work state input via camera 30, and generates an analysis result as work state information.

Explanatory information registration unit 113 registers explanatory information 136 regarding work criteria or a work process in storage 103, for example, according to an input by the administrator. In this example, the example of the administrator previously registering explanatory information 136 in storage 103 is described. However, the present disclosure is not limited thereto. The information may be downloaded from an external device connected to server 20 and registered in storage 103. The manner of registration is not particularly limited.

Determination unit 115 determines a work state of the worker, based on work information 132 acquired by work information acquisition unit 110. Specifically, determination unit 115 determines the work state of the worker, based on a comparison between the work state information generated by analysis unit 112 and criteria information 134 indicating the criterion of the worker's work process.

Relevant-personnel registration unit 114 registers information of a member of the personnel relevant to the worker's work process as relevant-personnel information 135 in storage 103, for example, according to an input by the administrator. Relevant-personnel information 135 is contact data of the relevant personnel for inquiring about a reason for exceeding the criterion according to a determination result of the work state of the worker by determination unit 115. In this example, the example of the administrator previously registering relevant-personnel information 135 in storage 103 is described. However, the present disclosure is not limited thereto. The information may be downloaded from an external device connected to server 20 and registered in storage 103. The manner of registration is not particularly limited.

Question generation unit 116 generates a question text regarding the work state of the worker, based on the determination result of determination unit 115. Specifically, question generation unit 116 generates the question text regarding the work state of the worker, based on the determination result of determination unit 115 and explanatory information 136. Inquiry unit 117 transmits the question text generated by question generation unit 116 and receives an answer to the question text. Specifically, inquiry unit 117 transmits the question text, based on relevant-personnel information 135.

Formatting unit 120 determines whether to register the answer received by inquiry unit 117 as new knowledge information. Specifically, formatting unit 120 performs similarity determination according to natural language processing on the answer received by inquiry unit 117 and knowledge information 133 registered in storage 103, and determines whether to register the answer as new knowledge information, based on a similarity determination result. As an example, formatting unit 120 generates data obtained by converting the answer received by inquiry unit 117 into vector information according to natural language processing, and determines whether to register the answer as new knowledge information through similarity determination using the vector information. Note that there are various methods for the similarity determination, and a method that does not use vector information may also be adopted. For example, similarity determination between the answer received by inquiry unit 117 and knowledge information 133 registered in storage 103 may be delegated to an external server having a large language model, and the determination result may be acquired.

Information registration unit 119 registers knowledge information 133 in which the work process and the answer received by inquiry unit 117 are associated with each other in storage 103. Specifically, information registration unit 119 registers, in storage 103, knowledge information 133 in which the work process and the answer received by inquiry unit 117 are associated with each other based on the determination result of formatting unit 120. In this regard, if the answer received by inquiry unit 117 is determined to be new knowledge information as the determination result of formatting unit 120, information registration unit 119 registers, in storage 103, knowledge information 133 in which the work process and the answer received by inquiry unit 117 are associated with each other. If the answer received by inquiry unit 117 is determined to be not new knowledge information as a formatting result of formatting unit 120, in contrast, information registration unit 119 does not register, in storage 103, knowledge information 133 in which the work process and the answer received by inquiry unit 117 are associated with each other. Information registration unit 119 registers knowledge information 133 including data of the converted vector information generated by formatting unit 120 in storage 103, as described below. In this example, the example is described of information registration unit 119 registering, when the answer received by inquiry unit 117 is new knowledge information as the determination result of formatting unit 120, knowledge information 133 in which the work process and the answer received by inquiry unit 117 are associated with each other in storage 103. However, all answers received by inquiry unit 117 may be registered in storage 103 as knowledge information 133.

Information presentation unit 118 presents knowledge information 133 stored in storage 103 to the worker. As an example, information presentation unit 118 projects (outputs) knowledge information 133 onto projection area DP via projector 10.

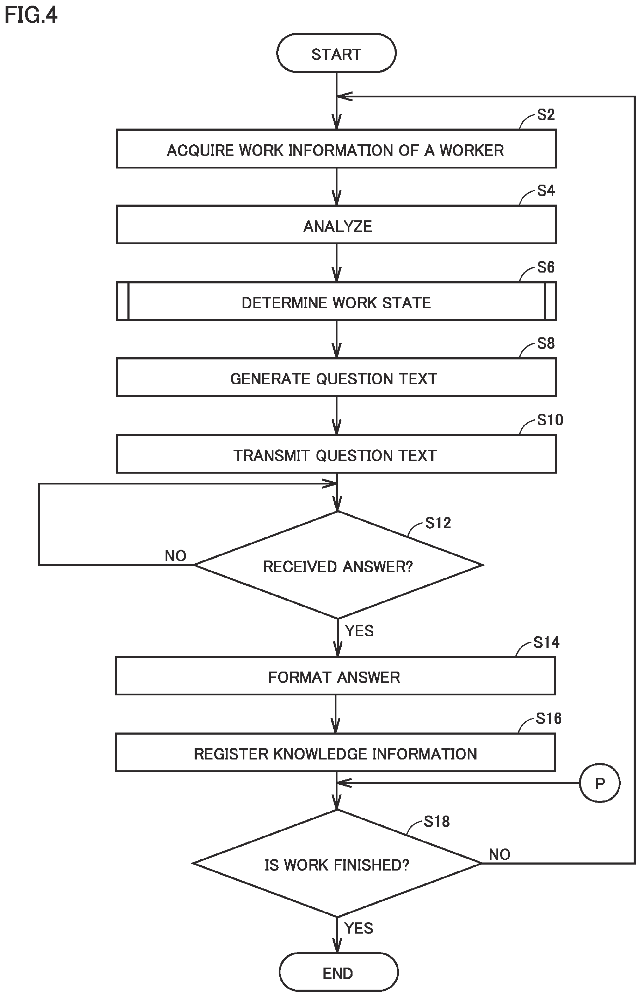

Fig. 4 is a flow diagram for illustrating a process of server 20 according to the embodiment. Referring to Fig. 4, server 20 acquires work information of a worker (step S2). Specifically, work information acquisition unit 110 acquires image data of a worker's work process from camera 30, and stores it in storage 103 as work information 132. Next, server 20 analyzes the work information stored in storage 103 (step S4). Analysis unit 112 analyzes work information 132, which is image data of a worker's work state input via camera 30, and generates an analysis result as work state information. As an example, the work state information is a time (measured value) of a worker's work process. For example, when a certain work process includes multiple processes (elements), a time (measured value) for each process (element) is measured. Note that the work state information includes various types of information regarding the worker's work, in addition to the measured value of the worker's work process. Specifically, the work state information includes a worker ID for identifying the worker, a process ID for identifying the work process, and an element ID for identifying a process (element) of the process. The worker ID, the process ID, and element ID can be identified through image analysis, based on a comparison between image data of the work state and reference data serving as comparison criteria. For example, the worker can be identified through image comparison between an image of the worker serving as the comparison criteria and the image of the worker included in the image data of the work state. The same applies to the process ID and element ID. Note that in this example, the worker ID, the process ID, and element ID are acquired through image analysis. However, the present disclosure is not limited thereto. For example, the worker themselves may input the worker ID, the process ID, and element ID. As an example, the time (measured value) of the worker's work process in this example may be measured by referring to image data and measuring a time from when the worker grips workpiece W until the worker places it on workbench TB. Alternatively, a measurement time of a sensor for detecting work may be used. For example, a sensor may be provided on driver DR, and the work time of the screw tightening work may be measured based on a time during which driver DR is gripped and a time during which driver DR is released according to a detection signal from the sensor. Note that the above is by way of example, and the measured time may be acquired according to other methods.

Next, server 20 determines the work state (step S6). Specifically, determination unit 115 determines the work state of the worker, based on a comparison between the work state information generated by analysis unit 112 and criteria information 134 indicating the criterion of the worker's work process. For example, a case will be described in which the criterion defines that the work process is within a predetermined period. Determination unit 115 compares the time (measured value) of the work process with the predetermined period, and determines whether the time (measured value) of the work process is included within the predetermined period. The process of determination unit 115 will be described later.

Next, server 20 generates a question text, based on the determination result (step S8). Specifically, question generation unit 116 generates a question text regarding the work state of the worker, based on the determination result of determination unit 115 and explanatory information 136 stored in storage 103. In this regard, if the work state is determined to be an out-of-criteria work as the determination result of determination unit 115, question generation unit 116 generates the question text. If the work state is determined to be a normal work as the determination result of determination unit 115, in contrast, question generation unit 116 does not generate a question text. In this case, the process proceeds to step S18, and returns to step S2 if the work is not finished. When the work state is determined to be an out-of-criteria work as the determination result of determination unit 115 and the time (measured value) of the work process exceeds the predetermined period, question generation unit 116 generates a question text for asking about an improvement plan for the work. Meanwhile, when the work state is determined to be an out-of-criteria work as the determination result of determination unit 115 and the time (measured value) of the work process is less than the predetermined period, question generation unit 116 generates a question text for asking about tips on why the work is appropriate.

Next, when the work state is determined to be an out-of-criteria work as the determination result of determination unit 115, server 20 transmits the question text (step S10). Specifically, inquiry unit 117 transmits the question text generated by question generation unit 116, based on relevant-personnel information 135.

Next, server 20 determines whether an answer has been received (step S12). Specifically, inquiry unit 117 determines whether an answer has been received from a transmission destination of the question text. In step S12, server 20 maintains the state of step S12 until an answer is received. In step S12, when an answer is received (YES in step S12), server 20 formats the answer (step S14). Specifically, formatting unit 120 determines whether to register the answer as new knowledge information. Formatting unit 120 performs similarity determination according to natural language processing on the answer received by the inquiry unit and knowledge information 133 registered in storage 103, and determines whether to register the answer as new knowledge information, based on a similarity determination result. Next, server 20 registers answer information as knowledge information (step S16). Specifically, information registration unit 119 registers, in storage 103, knowledge information 133 in which the work process and the answer received by inquiry unit 117 are associated with each other. In this regard, information registration unit 119 registers, in storage 103, knowledge information 133 in which the work process and the answer received by inquiry unit 117 are associated with each other, based on the determination result of formatting unit 120. If the answer received by inquiry unit 117 is determined to be new knowledge information as the determination result of formatting unit 120, information registration unit 119 registers, in storage 103, knowledge information 133 in which the work process and the answer received by inquiry unit 117 are associated with each other. If the answer received by inquiry unit 117 is determined to be not new knowledge information as the formatting result of formatting unit 120, information registration unit 119 does not register knowledge information 133 in which the work process and the answer received by inquiry unit 117 are associated with each other in storage 103. Next, server 20 determines whether the work is finished (step S18).

In step S18, if server 20 determines that the worker has finished the work (YES in step S18), the process ends (END). For example, the work may be determined to be finished if the worker leaves workbench TB based on image data from camera 30.

In step S18, if server 20 determines that the work is not finished (NO in step S18), on the other hand, the process returns to step S2 and the above process is repeated.

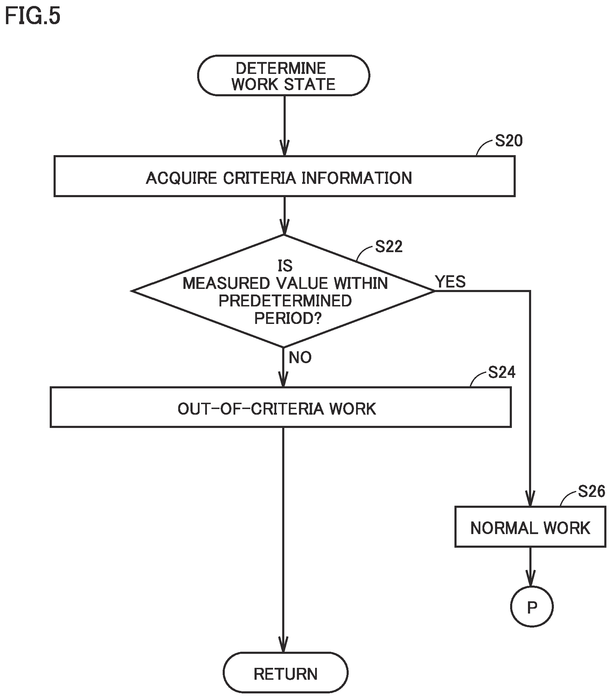

Fig. 5 is a subroutine flow diagram for illustrating the determination process of determination unit 115 according to the embodiment. Referring to Fig. 5, determination unit 115 acquires criteria information (step S20). Specifically, determination unit 115 refers to criteria information 134 stored in storage 103 and acquires criteria information corresponding to the work process. For example, when screw tightening work of an assembly process is being performed, information regarding a criterion of the screw tightening work is acquired. Next, determination unit 115 determines whether a measured value is within a predetermined period according to the acquired criteria information (step S22). If determination unit 115 determines that the measured value is within the predetermined period in step S22 , determination unit 115 determines that the work is a normal work (step S26). In this case, the process proceeds to the next "P." In other words, the process proceeds to step S18 in Fig. 4. If determination unit 115 determines that the measured value is not within the predetermined period in step S22, on the other hand, determination unit 115 determines that the work state is an out-of-criteria work (step S24). Then, the process ends (RETURN).

In this case, as examples where the work state is determined to be an out-of-criteria work include two cases: a case in which the time (measured value) of the work process exceeds the predetermined period, and a case in which the time (measured value) of the work process is less than the predetermined period.

As described above, when the work state is determined to be an out-of-criteria work, content of the question text is different between the case in which the time (measured value) of the work process exceeds the predetermined period and the case in which the time (measured value) of the work process is less than the predetermined period. Moreover, when the work state is determined to be an out-of-criteria work, in a knowledge data table described below, a state ("Bad") is registered corresponding to an answer to a question text for the case in which the time (measured value) of the work process exceeds the predetermined period. When the work state is determined to be an out-of-criteria work, in the knowledge data table described below, a state ("Good") is registered corresponding to an answer to a question text for the case in which the time (measured value) of the work process is less than the predetermined period.

In this example, the example is described of determining whether the time (measured value) of the work process is within a predetermined period as the determination process by determination unit 115. However, the determination process of determination unit 115 varies based on content of the work process. For example, for a hole drilling process, determination unit 115 may determine whether a hole size is within a criterion. Moreover, for a conveyance process, determination unit 115 may determine whether a conveyance speed is within a criterion.

### (Relevant-Personnel Information Registration)

A relevant-personnel table of relevant-personnel information 135 registered by a relevant-personnel registration unit 114 is now described.

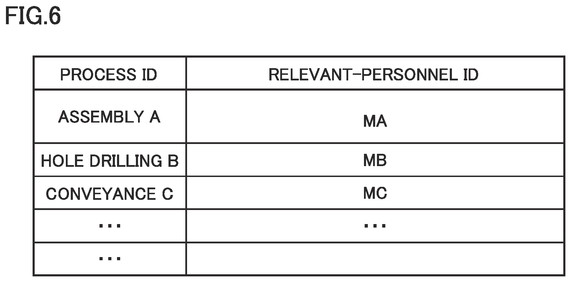

Fig. 6 is a diagram for illustrating the relevant-personnel table according to the embodiment. Referring to Fig. 6, in the relevant-personnel table, relevant-personnel IDs are associated with process IDs. Specifically, relevant personnel MA is associated with an assembly A process. Relevant personnel MB is associated with a hole drilling B process. Relevant personnel MC is associated with a conveyance C process.

Inquiry unit 117 refers to the relevant-personnel table, acquires a contact address (e-mail address or connection destination information) of a relevant-personnel ID corresponding to a corresponding process ID, and inquires of a terminal of the relevant-personnel ID about a question text. For example, a question text regarding a worker performing work of the assembly A process is transmitted to relevant personnel MA. Specifically, inquiry unit 117 transmits the question text to terminal 50 of relevant personnel MA. Inquiry unit 117 receives an answer from relevant personnel MA via terminal 50. Moreover, a question text regarding a worker performing work of the hole drilling B process is transmitted to relevant personnel MB. Specifically, inquiry unit 117 transmits the question text to a terminal 52 of relevant personnel MB. Inquiry unit 117 receives an answer from relevant personnel MB via terminal 52. Moreover, a question text regarding a worker performing work of the conveyance C process is transmitted to relevant personnel MC. Specifically, inquiry unit 117 transmits the question text to a terminal 54 of relevant personnel MC. Inquiry unit 117 receives an answer from relevant personnel MC via terminal 54. The example of information of a member of relevant personnel being associated with each process ID is described. However, the present disclosure is not limited thereto. Information of multiple relevant personnel may be associated. Moreover, the example of a contact address being different for each process ID is described. However, information of the same relevant personnel may be associated.

### (Explanatory Information Registration)

An explanatory information table of explanatory information 136 registered by an explanatory information registration unit 113 is now described.

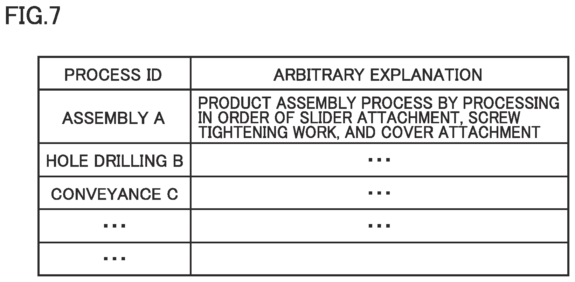

Fig. 7 is a diagram for illustrating the explanatory information table according to the embodiment. Referring to Fig. 7, in the explanatory information table, explanatory information is associated with each process ID. Specifically, corresponding to an assembly A process, explanatory information of a product assembly process by processing in the order of slider attachment, screw tightening work, and cover attachment is associated as elements of the process. Note that for hole drilling B and conveyance C processes, explanatory information is similarly associated and registered for each. Question generation unit 116 generates a question text regarding a work state of a worker, based on a determination result of determination unit 115 and explanatory information 136 stored in storage 103.

### (Criteria Registration)

A criteria table of criteria information 134 registered by a criteria registration unit 111 is now described.

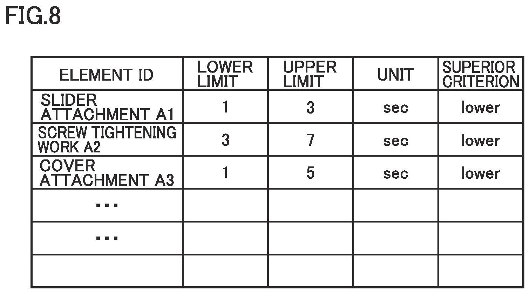

Fig. 8 is a diagram for illustrating the criteria table according to the embodiment. Referring to Fig. 8, in the criteria table, a lower limit and an upper limit of a threshold and a unit are associated with each element ID. Moreover, a superior criterion is associated. A superior criterion is a criterion indicating which range is superior with respect to values outside a range between the lower limit and the upper limit of the threshold.

An example is illustrated of a criterion of "lower" being registered indicating that a value in a range below the lower limit is superior. A criterion of "upper" being registered indicates that a value in a range above the upper limit is superior.

Specifically, slider attachment A1, screw tightening work A2, and cover attachment A3 are registered as element IDs.

Corresponding to slider attachment A1, a lower limit of 1, an upper limit of 3, a unit of seconds (sec), and a superior criterion of "lower" are associated. For slider attachment A1, a range from 1 second to 3 seconds is a criterion as a work time. The work time being less than 1 second indicates that the work is superior to the criterion (Good).

Corresponding to screw tightening work A2, a lower limit of 3, an upper limit of 7, a unit of seconds (sec), and a superior criterion of "lower" are associated. For screw tightening work A2, a range from 3 seconds to 7 seconds is a criterion as a work time. The work time being less than 3 seconds indicates that the work is superior to the criterion (Good).

Corresponding to cover attachment A3, a lower limit of 1, an upper limit of 5, a unit of seconds (sec), and a superior criterion of "lower" are associated. For cover attachment A3, a range from 1 second to 5 seconds is a criterion as a work time. The work time being less than 1 second indicates that the work is superior to the criterion (Good).

Note that in this example, a case in which slider attachment A1, screw tightening work A2, and cover attachment A3 are registered as element IDs are described. However, other than these, criteria are similarly registered for a hole drilling B process, a conveyance C process, etc.

As an example, determination unit 115 refers to the criteria table, acquires criteria information 134 of a corresponding element ID, and determines whether a measured value is within a predetermined period. For example, if the measured value is 2 seconds corresponding to screw tightening work A2, determination unit 115 determines out-of-criteria work (Good). For example, if the measured value is 10 seconds corresponding to screw tightening work A2, determination unit 115 determines out-of-criteria work (Bad).

### (Determination Process)

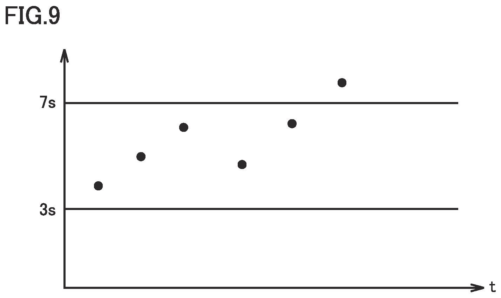

Fig. 9 is a diagram for illustrating the determination process of determination unit 115 according to the embodiment. Referring to Fig. 9, in this example, an example of results of performing screw tightening work A2 multiple times is illustrated. In this example, an example of a threshold being set between 3s and 7s is illustrated. As an example, a value (10 seconds) outside the threshold is illustrated. As an example, if a time (measured value) of the work process is a value (10 seconds) outside a predetermined period, determination unit 115 determines out-of-criteria work (Bad), generates a question text, and inquires of relevant personnel MA.

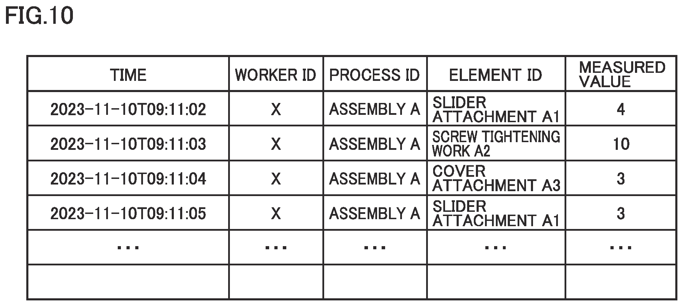

Fig. 10 is a diagram for illustrating a work data table which is work state information according to the embodiment. Referring to Fig. 10, analysis unit 112 analyzes work information 132 and generates the work data table. In this example, work data regarding each process is registered for each time. A case is shown in which a worker ID, a process ID, an element ID, and a measured value are associated with one another and registered corresponding to the time. Moreover, image data from camera 30 acquired as work information, that is, video data, may be associated and registered. Then, inquiry unit 117 may associate the registered video data with the question text generated by question generation unit 116 and inquire of the relevant personnel. Thereby, the relevant personnel can easily check the work according to the video data.

In this example, a case is shown in which a worker X repeatedly and continuously performs slider attachment A1, screw tightening work A2, and cover attachment A3 of assembly A. Specifically, a case is shown in which worker ID "X," process ID "Assembly A," element ID "Slider Attachment A1," and measured value "4" are associated and registered corresponding to time "2023-11-10T09:11:02." A case is shown in which worker ID "X," process ID "Assembly A," element ID "Screw Tightening Work A2," and measured value "10" are associated and registered corresponding to time "2023-11-10T09:11:03." A case is shown in which worker ID "X," process ID "Assembly A," element ID "Cover Attachment A3," and measured value "3" are associated and registered corresponding to time "2023-11-10T09:11:04." A case is shown in which worker ID "X," process ID "Assembly A," element ID "Slider Attachment A1," and measured value "3" are associated and registered corresponding to time "2023-11-10T09:11:05."

### (Knowledge Information Registration)

Information registration unit 119 registers, in storage 103, knowledge information 133 in which the work process and the answer received by inquiry unit 117 are associated with each other. A knowledge data table of knowledge information 133 registered by information registration unit 119 is now described.

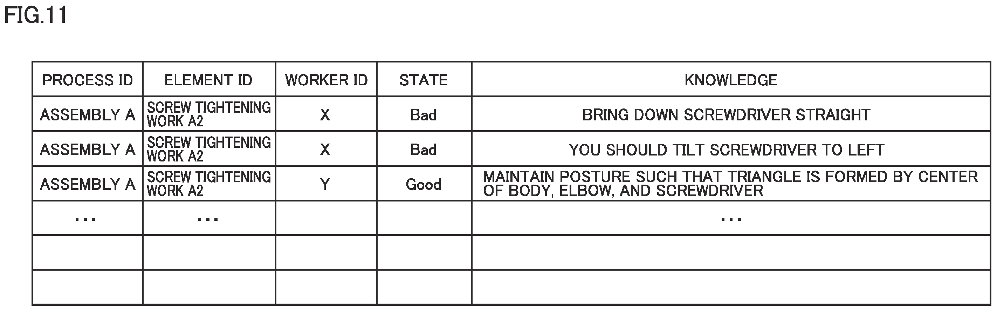

Fig. 11 is a diagram for illustrating the knowledge data table according to the embodiment. Referring to Fig. 11, in the knowledge data table, an element ID, a worker ID, a state, and knowledge are associated with each process ID and registered. Specifically, a case is shown in which element ID "Screw Tightening Work A2," worker ID "X," state "Bad," and knowledge "Bring down the screwdriver straight" are associated and registered corresponding to process ID "Assembly A." A case is shown in which element ID "Screw Tightening Work A2," worker ID "X," state "Bad," and knowledge "You should tilt screwdriver to left" are associated and registered corresponding to process ID "Assembly A." A case is shown in which element ID "Screw Tightening Work A2," worker ID "Y," state "Good," and knowledge "Maintain a posture such that a triangle is formed by the center of the body, the elbow, and the screwdriver" are associated and registered corresponding to process ID "Assembly A."

Note that the data table is not limited to this data table, and question texts may be associated and registered, or meta information such as a relevant-personnel ID who answered, criteria used for determination, and product information may be associated and registered.

### (Inquiry Screen)

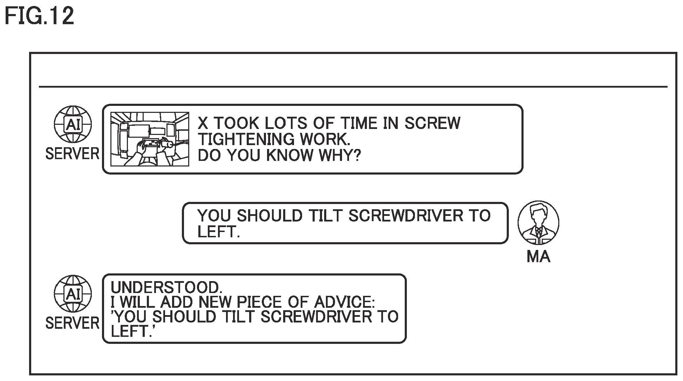

Fig. 12 is a diagram for illustrating an inquiry screen by inquiry unit 117 according to the embodiment. Referring to Fig. 12, in this example, a screen capable of a chat-formatted dialogue is shown.

Specifically, a case is shown in which inquiry unit 117 inquires of terminal 50 of relevant personnel MA on a chat-formatted interactive screen with a question "X took lots of time in screw tightening work. Do you know why?." In this example, a case is shown in which image data of X during work is attached together with a message of the question. The image data is acquired as work information via camera 30.

A case is shown in which relevant personnel MA replies with an answer "You should tilt screwdriver to left" on the interactive screen of terminal 50 to the question. Inquiry unit 117 receives the answer from terminal 50 and further replies to terminal 50 of relevant personnel MA, "Understood. I will add a new piece of advice: 'You should tilt screwdriver to left'." Note that the inquiry by the chat-formatted interactive screen is by way of example, and content of a question may be inquired about through transmission and reception of e-mails, and an answer to the question may be received. Note that the transmission of a confirmation message from a server to terminal 50 is optional.

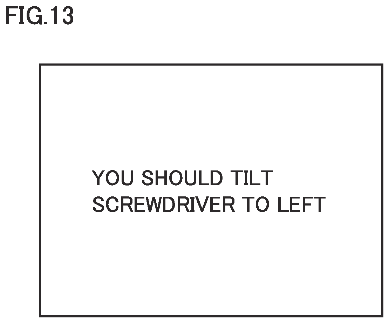

Fig. 13 is a diagram for illustrating presentation of knowledge information by information presentation unit 118 according to the embodiment. Referring to Fig. 13, information presentation unit 118 refers to a knowledge data table when a predetermined condition is satisfied, and presents knowledge information to a worker. In this example, information presentation unit 118 presents knowledge information to projection area DP via projector 10. Specifically, a case is shown in which a message "You should tilt screwdriver to left" is projected (output) onto projection area DP. The display enables the worker to check the knowledge information output to projection area DP. For example, when the worker starts the next work, analysis unit 112 generates work state information. Information presentation unit 118 may check a worker ID, a process ID, and an element ID included in the work state information, determine that the predetermined condition is satisfied when the information matches, acquire knowledge information registered in the knowledge data table, and present it to projection area DP. Moreover, not limited to one message, when there are multiple pieces of knowledge, they may all be presented or selectively presented. A presentation method is not particularly limited. In this example, a case in which information presentation unit 118 refers to the knowledge data table when the predetermined condition is satisfied and presents knowledge information to the worker has been described. However, for example, if there is an answer from relevant personnel MA, the predetermined condition may be determined to be satisfied, and knowledge information may be presented to the worker. The worker can appropriately improve work, based on the knowledge information by the presentation.

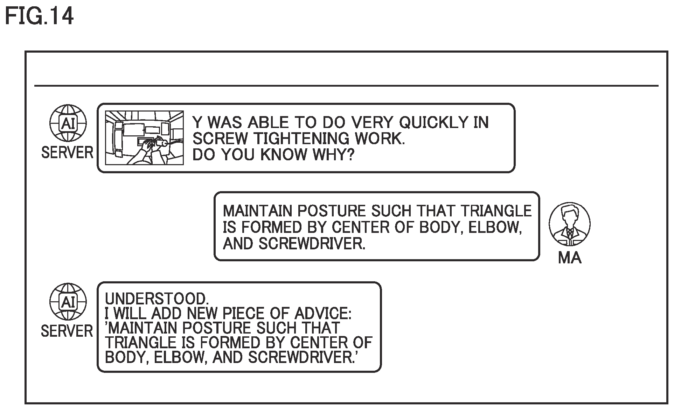

Fig. 14 is a diagram for illustrating another inquiry screen by inquiry unit 117 according to the embodiment. Referring to Fig. 14, in this example, a screen capable of a chat-formatted dialogue is shown.

Specifically, a case is shown in which inquiry unit 117 inquires of terminal 50 of relevant personnel MA on a chat-formatted interactive screen with a question "Y was able to do very quickly in screw tightening work. Do you know why?." In this example, a case is shown in which image data of Y during work is attached together with a message of the question. The image data is acquired as work information via camera 30.

A case is shown in which relevant personnel MA replies with an answer "Maintain posture such that triangle is formed by center of body, elbow, and screwdriver" on the interactive screen of terminal 50 to the question. Inquiry unit 117 receives the answer from terminal 50 and further replies to terminal 50 of relevant personnel MA, "Understood. I will add a new piece of advice: 'Maintain posture such that triangle is formed by center of body, elbow, and screwdriver'." Note that the inquiry by the chat-formatted interactive screen is by way of example, and content of a question may be inquired about through transmission and reception of e-mails, and an answer to the question may be received. Note that the transmission of a confirmation message from a server to terminal 50 is optional.

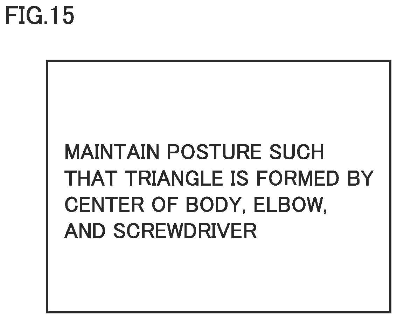

Fig. 15 is another diagram for illustrating the presentation of knowledge information by information presentation unit 118 according to the embodiment. Referring to Fig. 15, information presentation unit 118 refers to a knowledge data table when a predetermined condition is satisfied, and presents knowledge information to a worker. In this example, information presentation unit 118 presents knowledge information to projection area DP via projector 10. Specifically, a case is shown in which a message "It is good to maintain a posture such that a triangle is formed by the center of the body, the elbow, and the screwdriver" is projected (output) onto projection area DP. The display enables the worker to check the knowledge information output to projection area DP. For example, when the worker starts the next work, analysis unit 112 generates work state information. Information presentation unit 118 may check a process ID and an element ID included in the work state information, determine that the predetermined condition is satisfied when the information matches, acquire knowledge information registered in the knowledge data table, and may present it to projection area DP. The worker can appropriately improve work, based on the knowledge information by the presentation. Since knowledge of a state "Good" is applicable to anyone, it may be presented regardless of the worker ID or may be selectively presented. A presentation method is not particularly limited. In this example, a case in which information presentation unit 118 refers to the knowledge data table when the predetermined condition is satisfied and presents knowledge information to the worker has been described, but for example, it may be determined that the predetermined condition is satisfied when there is an answer from relevant personnel MA, and knowledge information may be presented to the worker.

When presenting knowledge information to the worker, information presentation unit 118 may present a message of knowledge as it is, or may present the content of the message by processing and editing it so that the meaning is naturally conveyed. For example, a message may be added as shown in Fig. 15, or the content of the message can be changed to "Let's form a triangle by the center of the body, the elbow, and the screwdriver."

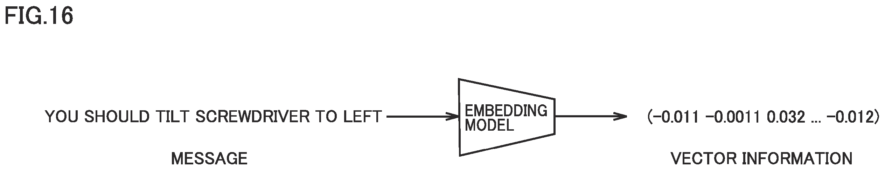

Fig. 16 is a diagram for illustrating a process of formatting unit 120 according to the embodiment. Referring to Fig. 16, formatting unit 120 generates data obtained by converting a message, which is an answer received by inquiry unit 117, into vector information according to natural language processing.

In this example, an example is described of vector information being generated for "You should tilt screwdriver to left" using an Embedding model according to natural language processing. Specifically, vector information (-0.011 -0.0011 0.032...-0.012) is shown.

In this example, information registration unit 119 registers knowledge information 133 including vector information generated by formatting unit 120 in a storage 103.

Formatting unit 120 determines whether to register an answer received by inquiry unit 117 as new knowledge information.

At that time, formatting unit 120 calculates similarity of the answer with data already registered in the knowledge data table, and determines whether to register the answer as new knowledge information 133 based on the similarity. Specifically, vector information of a knowledge portion is compared with data already registered in the knowledge data table, and if they have high similarity, they are determined to be similar knowledge information and the answer is not registered as new knowledge information 133. If they have low similarity, on the other hand, formatting unit 120 additionally registers the answer as new knowledge information. As an example, formatting unit 120 determines the similarity by cosine similarity between pieces of vector information as similarity determination.

Note that an object of vectorization is not limited to the knowledge portion. Vector information may be generated by vectorizing the knowledge portion and other information together as a set.

Registering vector information obtained by vectorizing the answer in storage 103 as knowledge information 133 enables efficient data comparison and search.

Specifically, by searching for and extracting knowledge information 133 having the same process ID, data related to insights (knowledge) of the process ID can be easily aggregated, and can be utilized, for example, for creating a work manual of the process.

Moreover, by collecting a registration history regarding a certain process from a knowledge data table and aggregating and displaying the number of registration cases in chronological order, for example, every month, an accumulation degree of knowledge of a target process can be displayed in chronological order. For example, the accumulation degree can be interpreted as maturity of a process, and growth of an organization can also be quantitatively grasped.

Moreover, by collecting a state "Good" regarding a certain process, knowledge information 133 which becomes so-called tips regarding the process is aggregated, and by sharing the knowledge information with various people, sharing of useful knowledge information can be easily achieved.

According to this method, knowledge regarding a work process of a worker can be efficiently collected and managed. Moreover, since knowledge can be objectively referred to and grasped by a knowledge data table, it can also be useful for smooth communication regardless of a distinction between an expert (veteran) and a beginner. Since insights (knowledge) can be accumulated as data, evolution of an organization can be quantitatively expressed using an aggregation result thereof. As the Insights (knowledge) in business are made collectable and reusable, an incentive for encouraging creativity and ingenuity in the entire organization can also be created.

While the embodiment according to the present invention has been described above, the presently disclosed embodiment should be considered in all aspects illustrative and not restrictive. The scope of the present invention is defined by the appended claims. All changes which come within the meaning and range of equivalency of the appended claims are to be embraced within their scope.

### REFERENCE SIGNS LIST

1 knowledge management system; 10 projector; 20 server; 30 camera; 50, 52, 54 terminal; 101 processor; 102 memory; 103 storage; 104 display controller; 105 input interface; 106 communication interface; 110 work information acquisition unit; 111 criteria registration unit; 112 analysis unit; 113 explanatory information registration unit; 114 relevant-personnel registration unit; 115 determination unit; 116 question generation unit; 117 inquiry unit; 118 information presentation unit; 119 information registration unit; 120 formatting unit; 131 knowledge management program; 132 work information; 133 knowledge information; 134 criteria information; 135 relevant-personnel information; and 136 explanatory information.

## Claims

1. A knowledge management apparatus, comprising:
an acquisition unit configured to acquire work information of a work process of a worker;
a determination unit configured to determine a work state of the worker, based on the work information acquired by the acquisition unit;
a question generation unit configured to generate a question text regarding the work state of the worker, based on a determination result of the determination unit;
an inquiry unit configured to transmit the question text generated by the question generation unit and receive an answer to the question text; and
an information registration unit configured to register, in a storage unit, knowledge information in which the work process and the answer received by the inquiry unit are associated with each other.

2. The knowledge management apparatus according to claim 1, further comprising
an analysis unit configured to analyze the work information acquired by the acquisition unit and generates work state information, wherein
the determination unit determines the work state of the worker, based on a comparison between the work state information generated by the analysis unit and criteria information indicating a criterion of the work process of the worker.

3. The knowledge management apparatus according to claim 2 further comprising a criteria registration unit configured to register the criteria information.

4. The knowledge management apparatus according to claim 1 further comprising
an explanatory information registration unit configured to register explanatory information regarding the work process, wherein
the question generation unit generates the question text regarding the work state of the worker, based on the determination result of the determination unit and the explanatory information.

5. The knowledge management apparatus according to claim 1 further comprising an information presentation unit configured to present the knowledge information registered in the storage unit to the worker.

6. The knowledge management apparatus according to claim 1 further comprising
a relevant-personnel registration unit configured to register information of personnel relevant to the work process of the worker, wherein
the inquiry unit transmits the question text, based on the information of the relevant personnel.

7. The knowledge management apparatus according to claim 1 further comprising
a formatting unit configured to determine whether to register the answer received by the inquiry unit as new knowledge information, wherein
the information registration unit registers, in the storage unit, knowledge information in which the work process and the answer received by the inquiry unit are associated with each other, based on a determination result of the formatting unit.

8. The knowledge management apparatus according to claim 7, wherein
the formatting unit
performs similarity determination according to natural language processing on the answer received by the inquiry unit and the knowledge information registered in the storage unit, and
determines whether to register the answer as new knowledge information, based on a similarity determination result.

9. A knowledge management method comprising:
a step of acquiring work information of a work process of a worker;
a step of determining a work state of the worker, based on the acquired work information;
a step of generating a question text regarding the work state of the worker, based on a determination result;
a step of transmitting the generated question text;
a step of receiving an answer to the question text; and
a step of registering, in a storage unit, knowledge information in which the work process and the received answer are associated with each other.

10. A knowledge management program that causes a computer to execute a knowledge management method, the program comprising:
a step of acquiring work information of a work process of a worker;
a step of determining a work state of the worker, based on the acquired work information;
a step of generating a question text regarding the work state of the worker, based on a determination result;
a step of transmitting the generated question text;
a step of receiving an answer to the question text; and
a step of registering, in a storage unit, knowledge information in which the work process and the received answer are associated with each other.
